# EUROPEAN PATENT SPECIFICATION

(11) **EP 2 675 598 B1**
(45) Date of publication and mention of the grant of the patent: **24.07.2019**
(21) Application number: 11706163.0
(22) Date of filing: 17.02.2011
(51) Int. Cl.: B25J 13/08

(54) **ROBOT MEMBER WITH ABSOLUTE MULTIPLE-REVOLUTION ENCODER**
ROBOTERTEIL MIT ABSOLUTEM MEHRFACHUMDREHUNGSKODIERER
ELÉMENT DE ROBOT COMPORTANT UN CODEUR MULTI-TOURS DU TYPE ABSOLU

(43) Date of publication of application: 25.12.2013
(73) Proprietor: ABB AG, 68309 Mannheim (DE)
(72) Inventor: VITTOR, Timothy, Pennsylvania 18045 (US)
(86) International application number: PCT/EP2011/000759
(87) International publication number: WO 2012/110055

(56) References cited:
- DE-A1- 19 506 938
- US-A- 4 740 690
- US-A- 5 025 563
- US-A1- 2006 208 176

## Description

The invention relates to a robot member comprising a manipulator segment, a drive for actuating the manipulator segment, a first turning shaft coupling the manipulator segment and the drive and an absolute multiple-revolution encoder for determining an absolute multi-revolution angle of the drive and the position of the manipulator segment therewith.

Such a robot member is known from US 5 025 563 A.

It is known, that robots are used in wide areas of industrial applications such as assembling, palletizing or painting. A robot typically comprises a robot manipulator, a tool mounted on the tip of the robot manipulator, for example a gripper, and a robot controller for coordinating the robot movement according to a given robot program. The manipulator itself typically has six or seven degrees of freedom in movement, whereas six degrees of freedom in movement are theoretically sufficient to reach each point within the working range of the robot in each orientation. Thus each degree of freedom in movement requires a manipulator segment, which is preferably pivotable connected with the adjacent manipulator segments. Each manipulator segment requires a dedicated drive for actuating such a pivoting. At the end of the chain of those for example six manipulator segments - the robot tip - typically a tool is foreseen such as a gripper. A gripper itself can be seen as part of the robot, since the gripper movement - opening and closing for example - is coordinated with the movement of the robot manipulator.

A desired movement of the robot tip respectively the robot tool typically proceeds along a linear or curved movement path. Since all manipulator segments normally are pivotable connected each to each other, the control of each manipulator segment requires the knowledge of the pivoting angle of each pivotable connection. For this purpose revolution counters are usual, which count the numbers of revolutions of the drive as input for the control system respectively as input for the robot controller. Knowing the gear transmission ratio inbetween a drive and the related pivotable manipulator segment it is possible to determine the pivoting angle of the belonging manipulator segment based on a calibrated reference position and the integrated number of revolutions of the drive. For a high accuracy it is furthermore required to consider not only the integer count of revolutions but also the real value. Disadvantageously within the state of the art is, that a reference position is required, which temporarily might be lost due to inappropriate circumstances so that a new calibration is required from time to time. To avoid situations like this absolute multiple-revolution encoder are known, which are able to determine an absolute revolution angle not only within a range inbetween 0° and 360°, but also within a range up to 20 x 360° and higher. Those multiple-revolution counters are for example based on an elevating screw which is disadvantageously subject to abrasion, high weight and big size.

Further examples of absolute multiple-revolution counters are disclosed in DE 195 06 938 A1 and US 2006/0208176 A1.

Based on this state of the art it is the objective of the invention to provide a robot member with an improved multiple-revolution encoder, which avoids the disadvantages mentioned before.

This problem is solved by a robot member as defined in the appended claim 1.

This robot member is characterized in that the absolute multiple-revolution encoder is comprising a first single-revolution encoder for encoding a revolution angle of a first rotary disc and a second single-revolution encoder for encoding a revolution angle of second rotary disc, whereas both rotary discs are mechanically coupled by applying a gear transmission rate similar but unequal to 1:1 so that an interference angle inbetween both discs arises when rotating, whereas a second turning shaft is foreseen to apply a belonging rotation on the rotary discs from the drive, whereas means are foreseen to determine an absolute multi-revolution angle of the second turning shaft based on the revolution angle of the first rotary disc and the interference angle.

An absolute single-revolution encoder is understood to be an encoder for determining the absolute orientation angle within a range of a single revolution (0° - 360°). An absolute multi-revolution encoder is understood to be an encoder for determining the angle of a multiple revolution (0° - n x 360°).

Thus it is possible to use two small standard absolute single-revolution encoders instead of one large multi-revolution encoder. A small standard single-revolution encoder is for example the AS5043 of Austria Microsystems. Such encoder is part of an integrated circuit in a standard housing with a dimension of for example 10mm x 10mm edge length. The diameter of the rotating discs is typically adapted thereon, for example 10mm. The assembly of the absolute multi-revolution encoder comprises two standard single-revolution revolution encoders, which typically encode a revolution within a range from 0° to 360°. They are mounted for example on a common printed circuit board, which covers a rectangular area with an edge length of a few centimetres. If the height of a rotating disc is assumed to be around 1mm and the height of the belonging bearings is assumed to be 10mm, the overall height of such an absolute multi-revolution encoder does not exceed 25mm. The rotatable disc is typically foreseen to rotate within a distance of a millimetre over the active surface of the belonging encoder such as the AS5043.

Due to the small dimensions and the low weight of such multi-revolution encoder assembly it is implementable into a robot manipulator. A robot manipulator has for example a working area from 60cm to 3m around its rotary base. As explained above, normal absolute multiple-revolution encoders are based for example on an elevating screw which is characterized by a larger size and higher weight.

Especially robot manipulators have to be constructed preferably slim, since each manipulator segment is a possible obstacle for the movement range of other neighboured manipulator segments of the robot manipulator. Thus the use of an absolute multiple-revolution encoder as described in the invention enables a construction of a robot manipulator with a higher degree of freedom in movement respectively with an improved reachability within its working range.

Furthermore a major issue of a robot manipulator is its load capacity, which might be limited to a few hundred grams for pick and place applications and to a few kilograms for handling operations. Thus also the lightweight aspect of the proposed absolute multiple-revolution encoder is rather advantageous for the operation of the robot, since its load capacity is not partly wasted to wear an unnecessary heavy revolution encoder.

In a variant of the invention the first and second single-revolution encoders linear encode a rotation angle of the belonging rotary disc inbetween 0° and 360°. The encoded signal might be either an analogue voltage signal or respectively a digital number. A linear encoding has the advantage that the interference angle inbetween them is easily to calculate by building a difference inbetween the encoded signal of the first encoder and the second encoder. In case that the difference is higher than a value corresponding to 360°, a value corresponding to 360° has to be subtracted or respectively added as often, that the adapted angle difference is within 0° and 360°. Of course it is also thinkable to define this range inbetween -180° and +180°.

Assuming that both rotary discs are calibrated on a zero position, there is no interference angle inbetween them in this position. Of course, each position of the rotary discs might be calibrated to zero. If for example a gear transmission rate of 20:21 is chosen inbetween both rotary discs, the interference angle will be zero again after 20 respectively 21 revolutions of the rotary discs. So the interference angle increases 20 times slower than the absolute angle within those 20 revolutions. Thus the absolute multiple revolution angle can be calculated by multiplication of the interference angle by a factor of 20 in this case. Since also the tolerances of the measured respectively calculated interference angle are multiplied, the accuracy of the determined absolute multiple-revolution angle is reduced by a factor of 20 in this example. The absolute revolution angle of preferably the first absolute revolution encoder is useable for increasing the accuracy of the final result. Hence the final result will preferably be build by a multiplication of 360° with the integer numbers of revolutions which themselves are derivable from the interference angle. The absolute angle of the first rotary disc is added to the result of the integer-multiplication, so that an absolute multiple-revolution angle with high accuracy is determined. Preferably at least the encoder is foreseen with means to perform such operations.

In a preferred form of the invention the gear transmission rate inbetween the rotary discs is in the range from 0,9 to 0,99 respectively 1,01 to 1,1. As explained in the main claim, a gear transmission rate of exactly one has to be avoided since no interference angle will arise. The gear transmission rate mentioned above will allow to determine absolute multiple-revolution angles inbetween 10 full revolutions (0,9 and 1,1) and 100 full revolutions (0,99 and 1,01). This is on one side a sufficient number of revolutions, which covers most requirements for a typical robot segment movement on one side. On the other side the number of revolutions is not as high, that problems with the accuracy of the measured angle are expected. For determining a number of 720 revolutions for example the interference angle has to be measured with an accuracy less than 0,5°, which is not easy to achieve.

In a further embodiment of the invention the first and second rotary disc are mechanically coupled by a transmission belt. To avoid a slip inbetween both discs, the transmission belt is preferably carried out as timing belt. Nevertheless, each kind of belt avoiding a slip is suitable. It is also thinkable to use a set of gear wheels with a belonging number of gear teeth for coupling the rotary discs. This is an easy and reliable method for coupling two rotary discs with a transmission rate similar to 1:1. It is also thinkable to not directly couple the discs themselves but to couple wheels by a transmission belt, which are arranged on the same shafts than the rotary discs. The gear transmission rate is determined by the belonging diameter of the wheels.

According to a preferred embodiment of the invention the first and/or second single-revolution encoder comprise hall sensors for determining the field orientation of a magnet mounted on one of the rotary discs related thereto. Typically four hall sensors arranged in an angle of 90° inbetween them are suitable to detect the orientation of a magnet on the related rotating disc. The advantage in the use of hall sensors consists in the high accuracy of the measurement and the continuous determination of the orientation angle of the magnet in a high resolution.

According to a further preferred embodiment of the invention the manipulator segment is a gripper tool. A gripper tool, which is typically mounted on the tip of a robot manipulator, can be seen as part of the robot itself. Normally the control of such a gripper tool is integrated into the same robot control system than the control of the robot manipulator itself. Of course it is also thinkable to provide a dedicated controller for a gripper tool which is integrated therein. The requirements on reduced weight and small dimensions are of a manipulator segment are as higher, as closer this component is located to the tip of a robot manipulator. Thus the highest effect is gained with an improved component at the robot tip, namely a gripper or another component with actuator mounted thereon.

But also a robot member with a manipulator segment, which is part of the robot manipulator itself, will enable the construction of a slimmer robot manipulator and a higher reachability respectively freedom in movement within its working range.

The advantages of the invention are also gained by a robot manipulator system comprising at least one robot member according to claim 6 or 7. The advantages have been already explained above.

Further advantageous embodiments of the invention are mentioned in the dependent claims.

The invention will now be further explained by means of an exemplary embodiment and with reference to the accompanying drawings, in which:
- Figure 1: shows an exemplary robot member,
- Figure 2: shows a top view on two exemplary rotary discs and
- Figure 3: shows schematic output values of encoders over revolution angle.

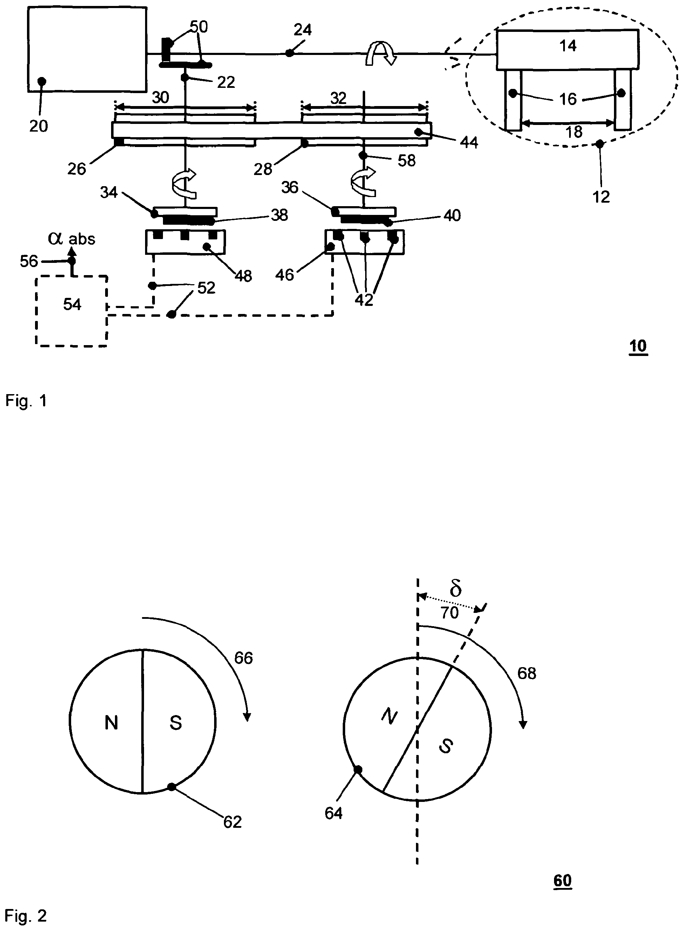

Fig. 1 shows an exemplary robot member 10, comprising an exemplary gripper tool 12, which is actuated by a motor drive 20. Both components are mechanically coupled with a turning shaft 24. The gripper tool 12 itself is schematically sketched with a gripper base 14, comprising for example a gear mechanism, and two gripper fingers 16, which can be opened and closed as indicated with the arrow 18. A rotation movement of the motor drive 20 is transmittable from the turning shaft 24 on a turning shaft 22 by two gearwheels 50. On the turning shaft 22 as well a first wheel 26 as a first rotary disc 34 are mounted, whereas belonging bearings are not shown. The first wheel 26 has a diameter 30 which is slightly higher than the diameter 32 of a second wheel, which is coupled with the first wheel 26 by a transmission belt 44, in this case a timing belt to avoid any slip. Since the diameter 32 of the second wheel 28 is lower than the diameter 30 of the first wheel, the second wheel 28 is rotating little faster than the first wheel. A preferred transmission rate is for example 20:21.

The second wheel 28 and a second rotary disc 36 are arranged on a second transmission shaft 58.

First 34 and second 36 rotary discs comprise a belonging magnet 38, 40 mounted on their lower surfaces, which are arranged face to face over a first 48 and a second 46 encoder. First 48 and second 46 encoder comprise four hall sensors 42 each, which are arranged in an angle of 90° each to each around the axis of rotation of the belonging rotary discs 34, 36. When the discs 34, 36 are rotating, the actual orientation of the magnetic fields of the magnets 38, 40 is determined by the hall sensors 42. The encoders 46, 48 are arranged within the case of a standard integrated circuit and provide over the transmission lines 52 data of the measured orientation angles to means 54 for determining an absolute multi-revolution angle, whereas the determined angle is provided on the output 56. The means 54 can be realized by a separate calculation unit such as an ASIC but also integrated in one of the encoders 46, 48 if enough calculation capability is foreseen therein. The signals which are provided over the transmission lines 52 might be for example an analogous voltage signal but also some digital values respectively numbers.

The signal of the output 56 is provided to a not shown control mechanism, which controls the rotation of the motor drive 20. In this case the value of the output 56 is zero, if the gripper fingers are closed and for example twenty, if the gripper fingers in their maximum outer position. So twenty revolutions of the motor drive are required to move the gripper fingers 16 inbetween their both end positions. The actual position of the gripper fingers is derivable from the determined absolute multiple-revolution angle α abs.

According to a not shown embodiment it is also thinkable to integrate first 26 and second 28 wheel into the transmission inbetween motor drive 20 and gripper tool 12. Of course the wheels can be carried out as gear wheels, whereas a transmission belt respectively time belt is not required.

Fig. 2 shows a top view 60 on two exemplary neighboured rotary discs 62, 64. They are mechanically coupled with a certain transmission rate, whereas the coupling itself is not shown. The first rotary disc 62 rotates with a first speed in direction of arrow 66 and the second rotary disc rotates with a second speed in direction of arrow 68. Since the first speed is assumed to be slower than the second speed, a first interference angle 70 arises, which increases with increasing numbers of rotation of both discs. Dependent on the transmission rate the interference angle goes beyond 360°, so that the measured interference angle will fall back to 0°.

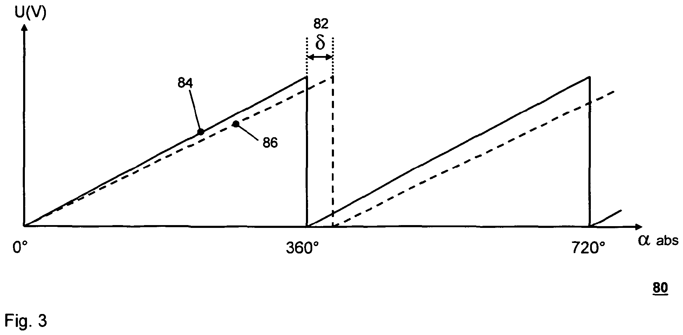

Fig. 3 shows schematic output values of encoders over revolution angle in a diagram 80. The solid line 84 corresponds to a voltage signal of a standard absolute angle revolution encoder, which is linearly increasing with increasing orientation angle of a rotary disc. After a full revolution of 360° has performed the signal starts again from its minimum value. The dotted line 86 in the same diagram indicates the voltage signal of a second encoder at the belonging same time, which determines the orientation angle of another rotary disc, which rotates slightly slower. Due to the difference of the belonging rotation speeds an interference angle 82 arises, which increases over the number of revolutions.

### List of reference signs

- 10: exemplary robot member
- 12: exemplary gripper tool
- 14: gripper base
- 16: gripper finger
- 18: movement direction of gripper finger
- 20: motor drive
- 22: turning shaft
- 24: first transmission shaft
- 26: first wheel
- 28: second wheel
- 30: diameter of first wheel
- 32: diameter of second wheel
- 34: first rotary disc
- 36: second rotary disc
- 38: magnet on first rotary disc
- 40: magnet on second rotary disc
- 42: hall sensors
- 44: transmission belt
- 46: second single-revolution encoder
- 48: first single-revolution encoder
- 50: gearwheels
- 52: transmission line
- 54: means for determining absolute multi-revolution angle
- 56: output
- 58: second transmission shaft
- 60: top view on two exemplary rotary discs
- 62: third rotary disc
- 64: fourth rotary disc
- 66: rotation of third rotary disc
- 68: rotation of fourth rotary disc
- 70: first interference angle
- 80: schematic output values of encoders over revolution angle
- 82: second interference angle
- 84: first voltage output over revolution angle
- 86: second voltage output over interfered revolution angle

## Claims

1. Robot member (10) comprising a manipulator segment (12), a drive (20) for actuating the manipulator segment (12), a first turning shaft (24) coupling the manipulator segment (12) and the drive (20) and an absolute multiple-revolution encoder for determining an absolute multi-revolution angle of the drive (20) and the position of the manipulator segment (12) therewith,
**characterized in that**
the absolute multiple-revolution encoder is comprising a first single-revolution encoder (48) for encoding a revolution angle of a first rotary disc (34) and a second single-revolution encoder (46) for encoding a revolution angle of second rotary disc (36), whereas both rotary discs (34, 36) are mechanically coupled (26 - 44 - 28) by applying a gear transmission rate similar but unequal to 1:1 so that an interference angle (70, 82) in between both discs (34, 36) arises when rotating (66, 68), whereas a second turning shaft (22) is foreseen to apply a belonging rotation on the rotary discs (34, 36) from the drive (20), whereas means (54) are foreseen to determine an absolute multi-revolution angle of the second turning shaft (22) based on the revolution angle of the first rotary disc (34) and the interference angle (70, 82).

2. Robot member according to claim 1, **characterized in that** the first (48) and second (46) revolution encoder linear encode (84) a rotation angle of the belonging rotary disc (34, 36) inbetween 0° and 360°.

3. Robot member according to claim 1 or claim 2, **characterized in that** the gear transmission rate inbetween the rotary discs (34, 36) is in the range from 0,9 to 0,99 respectively 1,01 to 1,1.

4. Robot member according to any of the previous claims, **characterized in that** the first (34) and second (36) rotary disc are mechanically coupled by a transmission belt (44).

5. Robot member according to any of the previous claims, **characterized in that** the first (48) and/or second (46) single-revolution encoder comprise hall sensors (42) for determining the field orientation of a magnet (38, 40) mounted on one of the rotary discs (34, 36) related thereto.

6. Robot member according to any of the previous claims, **characterized in that** the manipulator segment (12) is a gripper tool.

7. Robot member according to any of the claims 1 to 6, **characterized in that** the robot member is part of a robot manipulator.

8. Robot manipulator system, comprising at least one robot member according to claim 6 or 7.

## Patentansprüche

1. Roboterelement (10), das ein Manipulatorsegment (12), einen Antrieb (20) zum Betätigen des Manipulatorsegments (12), eine erste Drehwelle (24), die das Manipulatorsegment (12) und den Antrieb (20) koppelt, und einen Mehrfachumdrehungsabsolutwertgeber zum Bestimmen eines Mehrfachumdrehungsabsolutwinkels des Antriebs (20) und damit der Stellung des Manipulatorsegments (12) umfasst,
**dadurch gekennzeichnet, dass**
der Mehrfachumdrehungsabsolutwertgeber einen ersten Einzelumdrehungsgeber (48) zum Codieren eines Umdrehungswinkels einer ersten Drehscheibe (34) und eines zweiten Einzelumdrehungsgebers (46) zum Codieren eines Umdrehungswinkels einer zweiten Drehscheibe (36) umfasst, während beide Drehscheiben (34, 36) durch Anwenden eines Getriebeübersetzungsverhältnisses ähnlich aber ungleich 1:1 mechanisch gekoppelt sind (26 - 44 - 28), derart, dass ein Eingriffswinkel (70, 82) zwischen beiden Scheiben (34, 36) auftritt, wenn sie sich drehen (66, 68), während eine zweite Drehwelle (22) vorgesehen ist, um eine zugehörige Drehung vom Antrieb (20) auf die Drehscheiben (34, 36) anzuwenden und Mittel (54) vorgesehen sind, um einen Mehrfachumdrehungsabsolutwinkel der zweiten Drehwelle (22) auf der Grundlage der ersten Drehscheibe (34) und des Eingriffswinkels (70, 82) zu bestimmen.

2. Roboterelement nach Anspruch 1, **dadurch gekennzeichnet, dass** der erste (48) und der zweite (46) Umdrehungsgeber einen Drehwinkel der zugehörigen Drehscheibe (34, 36) zwischen 0° und 360° linear codieren (84) .

3. Roboterelement nach Anspruch 1 oder Anspruch 2, **dadurch gekennzeichnet, dass** das Getriebeübersetzungsverhältnis zwischen den Drehscheiben (34, 36) im Bereich von 0,9 bis 0,99 bzw. im Bereich von 1,01 bis 1,1 liegt.

4. Roboterelement nach einem der vorhergehenden Ansprüche, **dadurch gekennzeichnet, dass** die erste (34) und die zweite (36) Drehscheibe durch einen Übertragungsriemen (44) mechanisch gekoppelt sind.

5. Roboterelement nach einem der vorhergehenden Ansprüche, **dadurch gekennzeichnet, dass** der erste (48) und/oder der zweite (46) Einzelumdrehungsgeber Hallsensoren (42) umfassen, um die Feldorientierung eines Magneten (38, 40) zu bestimmen, der an einer der Drehscheiben (34, 36), die mit ihnen in Beziehung steht, montiert ist.

6. Roboterelement nach einem der vorhergehenden Ansprüche, **dadurch gekennzeichnet, dass** das Manipulatorsegment (12) ein Greifwerkzeug ist.

7. Roboterelement nach einem der Ansprüche 1 bis 6, **dadurch gekennzeichnet, dass** das Roboterelement ein Element eines Robotermanipulators ist.

8. Robotermanipulatorsystem, das mindestens ein Roboterelement nach Anspruch 6 oder 7 umfasst.

## Revendications

1. Elément de robot (10), comprenant un segment de bras manipulateur (12), un entraînement (20) pour actionner le segment de bras manipulateur (12), un premier arbre tournant (24) couplant le segment de bras manipulateur (12) et l'entraînement (20), et un codeur multitour absolu pour déterminer un angle multitour absolu de l'entraînement (20) et la position du segment de bras manipulateur (12) à l'aide de celui-ci,
**caractérisé en ce que** le codeur multitour absolu comprend un premier codeur monotour (48) pour coder un angle de révolution d'un premier disque rotatif (34) et un deuxième codeur monotour (46) pour coder un angle de révolution d'un deuxième disque rotatif (36), dans lequel les deux disques rotatifs (34, 36) sont couplés mécaniquement (26 - 44 - 28) par l'application d'un rapport de transmission d'engrenage similaire à, mais différent de 1:1, de sorte qu'un angle d'interférence (70, 82) entre les deux disques (34, 36) apparaît lorsqu'ils tournent (66, 68), dans lequel un deuxième arbre tournant (22) est prévu pour appliquer une rotation associée aux disques rotatifs (34, 36) provenant de l'entraînement (20), dans lequel des moyens (54) sont prévus pour déterminer un angle multitour absolu du deuxième arbre tournant (22) sur la base de l'angle de révolution du premier disque rotatif (34) et de l'angle d'interférence (70, 82).

2. Elément de robot selon la revendication 1, **caractérisé en ce que** les premier (48) et deuxième (46) codeurs de révolution appliquent un codage linéaire (84) à un angle de rotation du disque rotatif (34, 36) associé compris entre 0° et 360°.

3. Elément de robot selon la revendication 1 ou 2, **caractérisé en ce que** le rapport de transmission d'engrenage entre les disques rotatifs (34, 36) se situe dans la plage de 0,9 à 0,99, respectivement 1,01 à 1,1.

4. Elément de robot selon l'une quelconque des revendications précédentes, **caractérisé en ce que** les premier (34) et deuxième (36) disques rotatifs sont couplés mécaniquement par une courroie de transmission (44).

5. Elément de robot selon l'une quelconque des revendications précédentes, **caractérisé en ce que** le premier (48) et/ou le deuxième (46) codeur monotour comprennent des capteurs à effet Hall (42) pour déterminer l'orientation de champ d'un aimant (38, 40) monté sur l'un des disques rotatifs (34, 36) concernés.

6. Elément de robot selon l'une quelconque des revendications précédentes, **caractérisé en ce que** le segment de bras manipulateur (12) est un outil de préhension.

7. Elément de robot selon l'une quelconque des revendications 1 à 6, **caractérisé en ce que** l'élément de robot fait partie d'un bras manipulateur robotique.

8. Système de bras manipulateur robotique, comprenant au moins un élément de robot selon la revendication 6 ou 7.
